# EUROPÄISCHE PATENTANMELDUNG

(11) **EP 3 789 637 A1**
(43) Veröffentlichungstag der Anmeldung: **10.03.2021**
(21) Anmeldenummer: 19195932.9
(22) Anmeldetag: 06.09.2019
(51) Int. Cl.: F16H 57/033, F16H 57/023, F16H 57/021, F16H 57/025, F16H 57/029, F16H 57/031, F16H 57/032, F16H 57/04, F16H 57/02

(54) **GETRIEBEGEHÄUSE, GETRIEBEANORDNUNG UND VERFAHREN ZUR MONTAGE EINER GETRIEBEANORDNUNG**

(71) Anmelder: Flender GmbH, 46395 Bocholt (DE)
(72) Erfinder: Dinter, Ralf Martin, 45888 Gelsenkirchen (DE)
(74) Vertreter: Maier, Daniel Oliver

(57) **Zusammenfassung**

Die vorliegende Erfindung betrifft ein modulares Getriebegehäuse (7) zur Aufnahme eines Getriebes, insbesondere eines Zahnradgetriebes, das einen Gehäuseinnenraum umschließt und eine Längsrichtung definiert, wobei das Getriebegehäuse (7) einen zentralen Gehäuseabschnitt (8) und zwei Lagergehäuseabschnitte (9a, 9b), die auf gegenüberliegenden Seiten von diesem vorgesehen sind, besitzt, wobei die Lagergehäuseabschnitte (9a, 9b) jeweils Aufnahmemittel zur Aufnahme von Lagerungen für rotierende Getriebekomponenten, insbesondere Getriebewellen (2, 3) aufweisen, wobei der zentrale Gehäuseabschnitt (8) und die Lagergehäuseabschnitte (9a, 9b) lösbar miteinander verbunden, insbesondere miteinander verschraubt sind. Ferner betrifft die Erfindung eine Getriebeanordnung (1) und ein Verfahren zur Montage einer Getriebeanordnung (1). Darüber hinaus betrifft die Erfindung einen Antriebsstrang (41) mit einer solchen Getriebeanordnung (1), eine Windkraftanlage (37) mit einem solchen Antriebsstrang (41) sowie eine Industrie-Applikation (43) mit einer solchen Getriebeanordnung (1).

## Beschreibung

Die vorliegende Erfindung betrifft ein modulares Getriebegehäuse zur Aufnahme eines Getriebes, insbesondere eines Zahnradgetriebes, das einen Gehäuseinnenraum umschließt und eine Längsrichtung definiert, wobei das Getriebegehäuse einen zentralen Gehäuseabschnitt und zwei Lagergehäuseabschnitte, die auf gegenüberliegenden Seiten von diesem vorgesehen sind, besitzt, wobei die Lagergehäuseabschnitte jeweils Aufnahmemittel zur Aufnahme von Lagerungen für rotierende Getriebekomponenten, insbesondere Getriebewellen aufweisen, wobei der zentrale Gehäuseabschnitt und die Lagergehäuseabschnitte lösbar miteinander verbunden, insbesondere miteinander verschraubt sind.

Ferner betrifft die Erfindung eine Getriebeanordnung und ein Verfahren zur Montage einer Getriebeanordnung.

Darüber hinaus betrifft die Erfindung einen Antriebsstrang mit einer solchen Getriebeanordnung, eine Windkraftanlage mit einem solchen Antriebsstrang sowie eine Industrie-Applikation mit einer solchen Getriebeanordnung.

Getriebe dienen der Wandlung von Bewegungsgrößen, beispielsweise Drehzahlen, und werden in einer Vielzahl verschiedener Bereiche eingesetzt. Eine besondere Rolle spielen Zahnradgetriebe, bei welchen durch miteinander in Eingriff stehende Zahnräder Drehbewegungen von einer Antriebswelle auf eine Abtriebswelle übertragen werden können. Durch die Kombination von Zahnrädern unterschiedlicher Größen ändern sich dabei die Drehzahl und das auf die jeweilige Welle wirkende Drehmoment.

Zum Schutz vor äußeren Einflüssen, beispielsweise Verunreinigungen, und zur Aufnahme eines Schmiermittels, insbesondere eines Schmieröls, sind derartige Getriebe meistens in einem weitgehend geschlossenen Getriebegehäuse untergebracht.

Ein derartiges Getriebegehäuse ist aus der EP 2 946 129 B1 vorbekannt. Dieses umfasst einen zentralen Gehäuseabschnitt und zwei auf gegenüberliegenden Seiten von diesem positionierte Lagergehäuseabschnitte, in welchen Aufnahmemittel, vorliegend Bohrungen zur Aufnahme für Lagerungen von Getriebewellen ausgebildet sind. Der zentrale Gehäuseabschnitt des vorbekannten Getriebegehäuses ist als massive Schweißkonstruktion ausgeführt und umgibt den Gehäuseinnenraum quer zu den Getriebewellen vollständig. Die beiden Lagergehäuseabschnitte sind über eine Flanschverbindung mit dem zentralen Gehäuseabschnitt verschraubt und verfügen über jeweils drei einander gegenüberliegende Aufnahmebohrungen, so dass sich das Getriebegehäuse zur Verwendung in verschiedenen Getriebekonfigurationen, insbesondere in Verbindung mit verschiedenen drehmomentübertragenden Getriebekomponenten und somit verschiedenen Übersetzungsverhältnissen grundsätzlich eignet.

Das vorbekannte Getriebegehäuse hat sich grundsätzlich bewährt, jedoch kann zu Teilen als nachteilig angesehen werden, dass der Zugang zum Gehäuseinnenraum zu Wartungszwecken schwierig ist. Ferner stellt sich bei Verwendung von drehzahlübertragenden Getriebekomponenten mit kleinem Durchmesser eine effiziente und definierte Abfuhr der entstehenden Wärme über ein Schmiermittel als problematisch heraus, da ein Eintauchen in ein Schmierölbad nicht sichergestellt ist. Darüber hinaus ist das Getriebegehäuse aufgrund der massiven Ausführung als Schweißkonstruktion durch ein hohes Gewicht gekennzeichnet.

Der vorliegenden Erfindung liegt somit die Aufgabe zugrunde, ein alternatives Getriebegehäuse, eine Getriebeanordnung und ein Verfahren zur Montage einer Getriebeanordnung bereitzustellen, welche universell insbesondere für verschiedene Getriebekonfigurationen einsetzbar sind und die zuvor genannten Nachteile vermeiden.

Diese Aufgabe ist bei einem modularen Getriebegehäuse der eingangs genannten Art dadurch gelöst, dass der zentrale Gehäuseabschnitt mehrteilig ausgebildet ist und insbesondere ein oberes und ein unteres Gehäuseelement umfasst.

Durch die mehrteilige Ausgestaltung des zentralen Gehäuseabschnitts kann dieser individuell an die Aufgabe des Getriebes angepasst werden. Werden beispielsweise zur Übersetzung Getriebekomponenten, insbesondere Zahnräder, mit großen Durchmessern verwendet, kann der zentrale Gehäuseabschnitt wahlweise derart ausgestaltet sein, dass der Gehäuseinnenraum auf die Getriebekomponenten abgestimmt ist. Mit anderen Worten befindet sich vorzugsweise die Innenkontur des zentralen Gehäuseabschnitts in unmittelbarer Nähe der vorgesehenen drehzahlübertragenden Getriebekomponenten, um eine effiziente Wärmeabfuhr und einen möglichst kleinen Bauraum einer Getriebeanordnung zu realisieren. Somit schafft die Erfindung ein modulares Getriebegehäuse, welches universell an die entsprechende Getriebekonfiguration angepasst werden kann, indem die einzelnen Elemente des mehrteilig ausgebildeten zentralen Gehäuseabschnitts flexibel an die jeweilige Bewegungsaufgabe adaptiert werden.

Die mehrteilige Ausgestaltung des zentralen Gehäuseabschnitts führt auch zu einer einfacheren Zugänglichkeit zum Gehäuseinnenraum, wenn beispielsweise Wartungsarbeiten vorgenommen werden sollen oder einzelne Getriebekomponenten, beispielsweise Zahnräder, ausgetauscht werden müssen. Auch die Montage einer Getriebeanordnung wird auf diese Weise vereinfacht.

Eine Unterteilung des zentralen Gehäuseabschnitts in ein oberes und ein unteres Gehäuseelement ist insbesondere dann sinnvoll, wenn ein Schmieröl als Schmiermittel eingesetzt wird, welches sich bei ruhenden Getriebekomponenten sich im unteren Gehäuseelement badförmig sammelt. Somit kann das obere Gehäuseelement ohne Ablassen des Schmiermittels entnommen und ein einfacher und schneller Zugang zum Gehäuseinnenraum bereitgestellt werden.

Der Erfindung liegt ferner die grundsätzliche Überlegung zugrunde, eine funktionale Trennung zwischen den Lagergehäuseabschnitten und dem zentralen Gehäuseabschnitt vorzunehmen, wobei die Lagergehäuseabschnitte der Lagerung von rotierenden Getriebekomponenten dienen und somit die Lagerkräfte aufnehmen, wohingegen der zentrale Gehäuseabschnitt überwiegend der Abschirmung des Gehäuseinnenraums dient. Der zentrale Gehäuseabschnitt soll somit keine Lagerungskräfte der rotierenden Getriebekomponenten aufnehmen und kann deswegen verglichen mit den Lagergehäuseabschnitten dünnwandig und materialsparend ausgeführt werden.

Die der Erfindung zugrundeliegende Aufgabe ist ferner gelöst bei einer Getriebeanordnung mit einem modularen Getriebegehäuse gemäß der vorliegenden Erfindung und einem Getriebe, welches mindestens zwei Getriebewellen, die in die Aufnahmemittel der Lagergehäuseabschnitte eingebracht sind und drehmomentübertragende Getriebekomponenten tragen, welche miteinander wirkverbunden oder -verbindbar sind, wobei der zentrale Gehäuseabschnitt derart ausgewählt und/oder ausgestaltet ist, dass seine Innenkontur der Form der drehmomentübertragenden Getriebekomponenten folgt.

Somit ist vorgesehen, dass die Innenkontur des zentralen Gehäuseabschnitts, welcher vorliegend mehrteilig ausgebildet ist, in der Umgebung der drehmomentübertragenden Getriebekomponenten liegt. Dadurch wird sichergestellt, dass die bei der Drehmomentübertragung entstehende Wärme begünstigt durch die kurze Entfernung zur Innenkontur effizient abgeführt werden kann und bei Verwendung eines Schmieröls als Schmiermittel die drehmomentübertragenden Getriebekomponenten in dieses sicher eintauchen.

Darüber hinaus wird die erfindungsgemäße Aufgabe gelöst durch ein Verfahren zur Montage einer Getriebeanordnung, umfassend die folgenden Schritte:
- Bereitstellen der Lagergehäuseabschnitte;
- Bereitstellen der Getriebewellen, welche drehmomentübertragende Getriebekomponenten tragen;
- Auswählen eines geeigneten zentralen Gehäuseabschnitts derart, dass dessen Innenkontur der Form der drehzahlübertragenden Getriebekomponenten folgt;
- Einsetzen der Getriebewellen in die Lagergehäuseabschnitte;
- Anbringen des zentralen Gehäuseabschnitts an den Lagergehäuseabschnitten.

Dem erfindungsgemäßen Verfahren liegt die Überlegung zugrunde, eine Art Baukastensystem zur Montage eines Getriebes zu schaffen, bei welchem die Gehäuseelemente für den zentralen Gehäuseabschnitt derart ausgestaltet sind, dass die Innenkontur der Form der jeweils vorgesehenen drehmomentübertragenden Getriebekomponenten folgt. Mit anderen Worten wird der zentrale Gehäuseabschnitt derart ausgewählt, bzw. ausgestaltet, dass er an die für die konkrete Getriebekonfiguration vorgesehenen drehmomentübertragenden Getriebekomponenten, insbesondere Zahnräder, angepasst ist. Dadurch ergibt sich eine im Hinblick auf die Wärmeabfuhr optimierte universelle Getriebeanordnung.

Bevorzugt ist die erfindungsgemäße Getriebeanordnung dadurch gekennzeichnet, dass die Innenkontur des zentralen Gehäuseabschnitts von den drehmomentübertragenden Getriebekomponenten in Längsrichtung und/oder quer zur Längsrichtung höchstens 100 mm, insbesondere höchstens 20 mm, bevorzugt höchstens 5 mm und/oder mindestens 2 mm, insbesondere mindestens 3 mm, bevorzugt mindestens 4 mm beabstandet ist. Derartige Abstände von der Innenkontur des zentralen Gehäuseabschnitts haben sich als vorteilhaft herausgestellt, um einerseits eine effiziente Wärmeübertragung aufgrund einer hinreichend kurzen Entfernung zu ermöglichen und auf der anderen Seite einen hinreichenden Abstand zur Innenkontur des zentralen Gehäuseabschnitts sicherzustellen, um eine ungehinderte Drehbewegung der Getriebekomponenten und eine geringe Reibung zu erzielen.

Bevorzugt umfassen die drehmomentübertragenden Getriebekomponenten Zahnräder. Miteinander in Eingriff stehende Zahnräder stellen eine effiziente Möglichkeit der Drehmoment- und Drehzahlübertragung von einer Getriebewelle auf eine andere dar. Gleichzeitig fallen die Reibungsverluste durch eine übliche Flüssigkeitsschmierung, insbesondere mittels eines Schmieröls, gering aus.

In weiterer Ausgestaltung des erfindungsgemäßen Getriebegehäuses können an dem zentralen Gehäuseabschnitt einerseits und an den beiden Lagergehäuseabschnitten andererseits zueinander korrespondierende Positioniermittel vorgesehen sein. Dadurch wird bei der Montage der Getriebeanordnung sichergestellt, dass die einzelnen Gehäuseabschnitte richtig zueinander positioniert sind und insbesondere die einander gegenüberliegenden Lagergehäuseabschnitte zueinander ausgerichtet sind.

In an sich bekannter Weise können die Positioniermittel Zylinderstifte und korrespondierende Positionierbohrungen umfassen. Zylinderstifte in Verbindung mit korrespondierenden Bohrungen stellen eine fertigungstechnisch einfache Möglichkeit dar, Positioniermittel zu realisieren.

In bevorzugter Ausgestaltung des erfindungsgemäßen Getriebegehäuses ist die Außenkontur des zentralen Gehäuseabschnitts derart ausgebildet, dass diese in Längsrichtung betrachtet zu einer Seite hin konisch zusammenläuft. Dadurch wird eine effektive und verlustarme Umströmung des zentralen Gehäuseabschnitts mit Luft, welche insbesondere der Kühlung dienen kann, ermöglicht.

Bevorzugt weist der zentrale Gehäuseabschnitt Kühlmittel zur Abfuhr von Wärme aus dem Gehäuseinnenraum auf. Auf diese Weise wird die vom Schmiermittel aufgenommene Wärme in effizienter Weise nach außen abgeführt.

In konkreter Ausgestaltung können die die Kühlmittel Kühlrippen umfassen, welche sich insbesondere quer, bevorzugt senkrecht zur Längsrichtung erstrecken. Alternativ oder ergänzend können die Kühlmittel im zentralen Gehäuseabschnitt ausgebildete Hohlräume, insbesondere Kühlmittelkanäle zum Durchleiten eines Kühlfluids, insbesondere von Druckluft und/oder Wasser, umfassen. Durch Kühlrippen wird die effektive Oberfläche des Gehäuseabschnitts vergrößert, so dass eine größere Wärmemenge aufgenommen und an die Umgebung abgeführt werden kann. Ferner besteht die Möglichkeit, je nach Umfang der im Getriebegehäuse entstandenen Wärme durch Kühlmittelkanäle eine über die reine Konvektion mit der Umgebung hinausgehende Wärmemenge abzuleiten.

Die Hohlräume, insbesondere die Kühlmittelkanäle sind dabei bevorzugt mit einem Kühlfluid gefüllt, welches in einem geschlossenen Kreislauf zirkuliert und einem Wärmetauscher zugeführt wird, über welchen die im Kühlfluid aufgenommene Wärme an die Umgebung abgegeben wird. Für die Zirkulation des Kühlfluids ist vorzugsweise eine entsprechende Zirkulationspumpe vorgesehen.

In weiterer Ausgestaltung des erfindungsgemäßen Getriebegehäuses weisen die Aufnahmemittel der Lagergehäuseabschnitte jeweils mehrere, insbesondere jeweils vier sich parallel zueinander in den Lagergehäuseabschnitten erstreckende Aufnahmebohrungen zur Aufnahme der Lagerungen für Getriebewellen, auf. In derartige Aufnahmebohrungen können auf einfache Weise Wälzlager eingesetzt werden, die üblicherweise bereits an der zu lagernden Getriebewelle angebracht sind. Mehrere, insbesondere vier parallel zueinander angeordnete Aufnahmebohrungen sorgen dafür, dass das erfindungsgemäße Getriebegehäuse universell eingesetzt werden kann und für verschiedene Getriebekonfigurationen verwendet werden kann. Mit anderen Worten können einheitlich gestaltete Lagergehäuseabschnitte beliebig mit einem auf die jeweilig angestrebte Getriebekonfiguration angepassten zentralen Gehäuseabschnitt kombiniert werden. Je nach Bedarf können dabei mehrere Getriebestufen oder verschiedene Getriebeübersetzungen durch die Wahl der Aufnahmebohrungen für die Getriebewellen realisiert werden.

Bevorzugt verlaufen dabei die Mittelachsen der Aufnahmebohrungen bevorzugt in einer Ebene. Dies vereinfacht die Fertigung der Lagergehäuseabschnitte und vereinfacht die Auslegung der Getriebeanordnung hinsichtlich der Auswahl der drehmomentübertragenden Getriebekomponenten.

In weiterer Ausgestaltung dieser Ausführungsform weisen die einzelnen Aufnahmebohrungen unterschiedliche Durchmesser auf. Dadurch wird eine im Hinblick auf die übertragenden Drehmomente effiziente Getriebeanordnung realisiert, da Getriebewellen, welche ein geringes Drehmoment übertragen, mit einem kleineren Durchmesser ausgeführt werden können als Getriebewellen, welche ein hohes Drehmoment übertragen.

In an sich bekannter Weise können die Lagergehäuseabschnitte zweiteilig ausgebildet sein und ein Oberteil und ein Unterteil aufweisen. Bevorzugt verläuft dann eine Trennebene zwischen dem Oberteil und dem Unterteil der Lagergehäuseabschnitte mittig durch die Aufnahmebohrungen. Durch die Unterteilung in ein Oberteil und ein Unterteil wird eine einfache Montage, insbesondere ein einfaches Einbringen der mit einer Lagerung versehenen Getriebewellen ermöglicht.

Zum ortsfesten Fixieren des Getriebegehäuses können die Lagergehäuseabschnitte Stützmittel aufweisen. Bevorzugt umfassen diese nach außen vorragende Füße, welche eine Stellfläche definieren. In weiterer Ausgestaltung sind in den Füßen Durchgangsbohrungen ausgebildet, um den Lagergehäuseabschnitt festzuschrauben und so ortsfest zu fixieren.

Dieser Ausgestaltung liegt die Überlegung zugrunde, von den rotierenden Getriebewellen auf die Lagergehäuseabschnitte übertragene Kräfte, welche sich beispielsweise bei schrägverzahnten Zahnradgetrieben geben, direkt nach außen zu übertragen, wodurch keine Kräfte auf den zentralen Gehäuseabschnitt wirken mit der Folge, dass dieser dünnwandig und somit materialsparend ausgebildet sein kann.

Zweckmäßigerweise sind die beiden Lagergehäuseabschnitte über Trägerelemente miteinander verbunden, welche ausgebildet und geeignet sind, Kräfte in Längsrichtung zu übertragen. Bevorzugt umfassen die Trägerelemente Verbindungsstangen, welche sich zwischen den Lagergehäuseabschnitten erstrecken und mit diesen lösbar verbunden sind, insbesondere verschraubt sind. Bevorzugt erstrecken sich die Verbindungsstangen innerhalb des Gehäuses. Dadurch wird vermieden, dass Kräfte in Längsrichtung über den zentralen Gehäuseabschnitt übertragen werden, wodurch ebenfalls eine dünnwandige Ausgestaltung und somit eine optimierte Wärmeabfuhr des zentralen Gehäuseabschnitts erreicht wird.

Bevorzugt ist der Gehäuseinnenraum fluiddicht abgedichtet. Dies ist insbesondere dann erforderlich, wenn ein flüssiges Schmiermittel, insbesondere ein Schmieröl zum Schmieren und zur Kühlung der drehmomentübertragenden Getriebekomponenten eingesetzt wird. Konkret kann die fluiddichte Abdichtung dadurch realisiert werden, dass zwischen den Lagergehäuseabschnitten und dem zentralen Gehäuseabschnitt, und/oder zwischen dem oberen und dem unteren Gehäuseelement, und/oder zwischen den Oberteilen und den Unterteilen der Lagergehäuseabschnitte Dichtmittel vorgesehen sind, insbesondere in Form eines Dichtbandes oder Dichtrings oder einer Papierdichtung.

In bevorzugter Ausgestaltung des erfindungsgemäßen Getriebegehäuses ist mindestens ein Gehäuseabschnitt durch Gießen und/oder durch ein generatives Fertigungsverfahren, insbesondere mittels selektiven Laserschmelzens oder mittels Binder Jetting, hergestellt worden. Beispielsweise ist es denkbar, dass die Lagergehäuseabschnitte unabhängig von der jeweiligen Getriebekonfiguration einheitlich ausgebildet sind und durch Gießen hergestellt werden, wobei eine spanende Nachbearbeitung der Aufnahmebohrungen durchgeführt wird, und der an die jeweilige Getriebekonfiguration anzupassende zentrale Gehäuseabschnitt mittels eines generativen Fertigungsverfahrens hergestellt wird, da auf diese Weise das aufwendige Anfertigen einer Vielzahl von Gussformen nicht erforderlich ist.

Um eine gute Wärmeübertragung zu realisieren, besteht bevorzugt mindestens ein Gehäuseabschnitt, insbesondere der zentrale Gehäuseabschnitt, aus einem metallischen Werkstoff, insbesondere einem Grauguss oder einer Aluminiumlegierung, und/oder aus einem Thermoplast. Durch Aluminiumlegierungen oder Thermoplaste können gute Wärmeübertragungen mit einem Übertragungskoeffizienten von 45 W/mK oder höher realisiert werden.

Ferner schafft die Erfindung einen Antriebsstrang, umfassend eine Rotorwelle, die drehmomentübertragend mit einer Getriebeanordnung verbunden ist, welche wiederrum drehmomentübertragend mit einem Generator verbunden ist, dadurch gekennzeichnet, dass die Getriebeanordnung als erfindungsgemäße Getriebeanordnung ausgebildet ist.

Zudem schafft die vorliegende Erfindung eine Windkraftanlage, umfassend einen Rotor, der an einer Gondel angebracht ist, wobei in der Gondel ein Antriebsstrang angeordnet ist, der drehmomentübertragend mit dem Rotor verbunden ist, wobei der Antriebsstrang als erfindungsgemäßer Antriebsstrang ausgebildet ist.

Darüber hinaus schafft die vorliegende Erfindung eine Industrie-Applikation, umfassend ein Antriebsmittel, das mit einer Getriebeanordnung drehmomentübertragend verbunden ist, die mit einer mechanischen Anwendung drehmomentübertragend gekoppelt ist, wobei die Getriebeanordnung als erfindungsgemäße Getriebeanordnung ausgebildet ist.

Hinsichtlich weiterer vorteilhafter Ausgestaltungen der Erfindung wird auf die Unteransprüche, sowie auf die nachfolgende Beschreibung eines Ausführungsbeispiels unter Bezugnahme auf die beiliegende Zeichnung verwiesen.

In der Zeichnung zeigt:
- FIG 1: eine Getriebeanordnung gemäß der vorliegenden Erfindung in einer Schnittansicht;
- FIG 2: die Getriebeanordnung aus FIG 1 in einer entlang der Linien A-A teilweise geschnittenen Ansicht;
- FIG 3: eine geschnittene Seitenansicht einer Ausführungsform einer erfindungsgemäßen Windkraftanlage;
- FIG 4: eine schematische Darstellung einer Ausführungsform eines erfindungsgemäßen Antriebsstrangs; und
- FIG 5: eine schematische Darstellung einer Ausführungsform einer erfindungsgemäßen Industrie-Applikation.

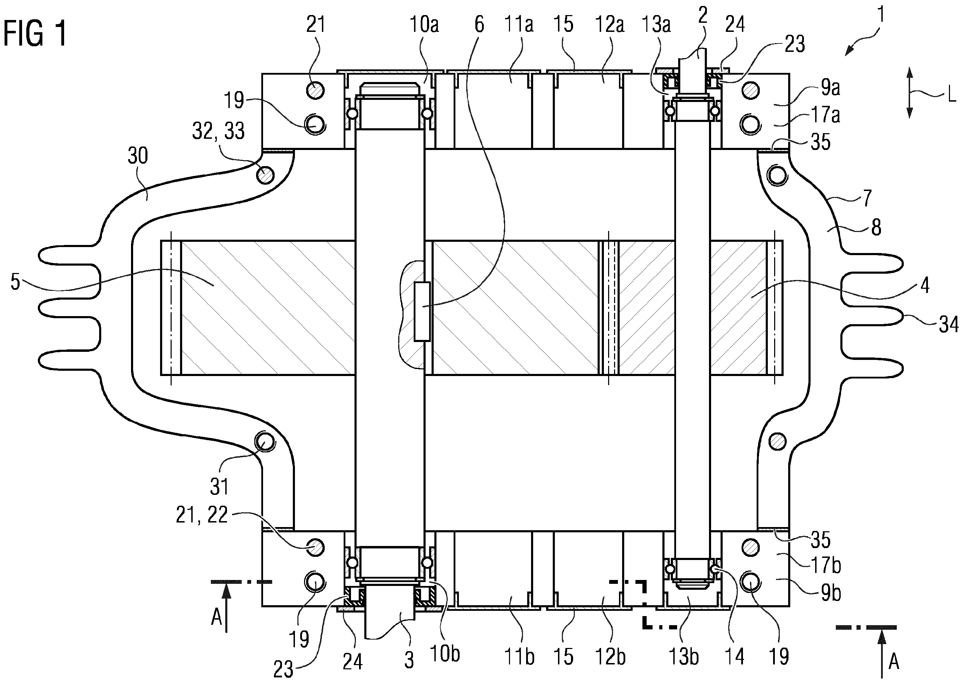

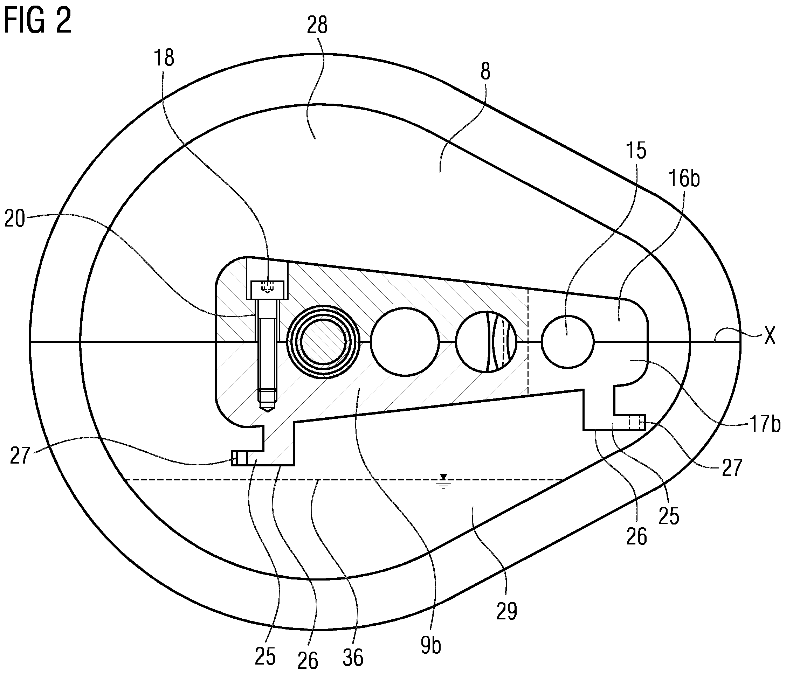

Die Figuren 1 und 2 zeigen eine als Zahnradgetriebe ausgebildete Getriebeanordnung 1 gemäß der vorliegenden Erfindung. Die Getriebeanordnung 1 dient dazu, eine hohe Drehzahl einer Antriebswelle 2 in eine niedrige Drehzahl einer sich parallel zu dieser erstreckenden Abtriebswelle 3 umzusetzen. Dazu sind sowohl die Antriebswelle 2 als auch die Abtriebswelle 3 drehfest mit jeweils einem Zahnrad 4, 5 über eine Passfeder 6 verbunden, wobei die beiden Zahnräder 4, 5 über eine zueinander korrespondierende Verzahnung miteinander in Eingriff stehen.

Zum Schutz vor äußeren Einflüssen ist die Getriebeanordnung 1 von einem modularen Getriebegehäuse 7 umschlossen. Dieses besitzt einen zentralen Gehäuseabschnitt 8 und zwei Lagergehäuseabschnitte 9a, 9b, die auf gegenüberliegenden Seiten von dem zentralen Gehäuseabschnitt 8 vorgesehen sind.

Die beiden Lagergehäuseabschnitte 9a, 9b besitzen Aufnahmemittel zur Aufnahme der Lagerungen für die beiden Getriebewellen 2, 3. Konkret weisen die Aufnahmemittel jeweils vier sich parallel zueinander in den Lagergehäuseabschnitten 9a, 9b erstreckende Aufnahmebohrungen 10a, 10b, 11a, 11b, 12a, 12b, 13a, 13b mit unterschiedlichen Durchmessern zur Aufnahme von Lagerungen für Getriebewellen auf. Die Mittelachsen der Aufnahmebohrungen 10a, 10b, 11a, 11b, 12a, 12b, 13a, 13b verlaufen in einer Ebene.

Die Antriebswelle 2 und die Abtriebswelle 3 sind mit einander gegenüberliegend angeordneten Rillenkugellagern 14 versehenen, deren Außenringe in den jeweiligen Aufnahmebohrungen 10a, 10b, 13a, 13b anliegen. Von den jeweils vier Aufnahmebohrungen 10a, 10b, 11a, 11b, 12a, 12b, 13a, 13b sind lediglich die äußeren Aufnahmebohrungen 10a, 10b, 13a, 13b mit einer Lagerung für eine Getriebewelle 2, 3 versehen. Die jeweils mittigen Aufnahmebohrungen 11a, 11b, 12a, 12b sind durch Verschlussstopfen 15 fluiddicht abgedichtet. Gleiches gilt für die Aufnahmebohrung 10a des Lagergehäuseabschnitts 9a sowie für die Aufnahmebohrung 13b des Lagergehäuseabschnitts 9b, in welchen zwar eine Lagerung der entsprechenden Getriebewelle untergebracht ist, jedoch die Antriebswelle 2 bzw. die Abtriebswelle 3 den jeweiligen Lagergehäuseabschnitt 9a, 9b nicht vollständig durchdringt.

Zur Vereinfachung der Montage sind die Lagergehäuseabschnitte 9a, 9b zweiteilig ausgebildet und weisen jeweils ein Oberteil 16a, 16b und ein Unterteil 17a, 17b auf, wobei eine Trennebene X zwischen dem Oberteil 16a, 16b und dem Unterteil 17a, 17b mittig durch die Aufnahmebohrungen 10a, 10b, 11a, 11b, 12a, 12b, 13a, 13b verläuft. Vorliegend ist die Trennebene X identisch mit der Schnittebene der FIG 1. Das Oberteil 16a ist mit dem Unterteil 17a durch zwei Innensechskantschrauben 18 miteinander verschraubt. Gleiches gilt für das Oberteil 16b mit dem Unterteil 17b. Dazu sind in den beiden Unterteilen 17a, 17b jeweils eine Gewindebohrung 19 vorgesehen, in welche die Innensechskantschrauben 18 durch korrespondierende Bohrungen 20, welche in den Oberteilen 16a, 16b ausgebildet sind, eingeschraubt sind.

Ferner sind Positioniermittel vorgesehen, um die Oberteile 16a, 16b gegenüber den jeweiligen Unterteilen 17a, 17b auszurichten. Die Positioniermittel umfassen vorliegend mehrere Zylinderstifte 21, die in zueinander korrespondierenden Positionierbohrungen 22 in den Oberteilen 16a, 16b und den Unterteilen 17a, 17b angeordnet sind.

Die Antriebswelle 2 verlässt das Getriebegehäuse 7 über die Aufnahmebohrung 13a des Lagergehäuseabschnitts 9a, die Abtriebswelle 3 auf der in Längsrichtung L gegenüberliegenden Seite des Gehäuses, konkret über die Aufnahmebohrung 10b des Lagergehäuseabschnitts 9b. Zwischen der Antriebswelle 2 bzw. der Abtriebswelle 3 und der jeweiligen Aufnahmebohrung 13a bzw. 10b ist jeweils ein Radialwellendichtring 23 angeordnet, durch welchen die rotierenden Getriebewellen 2, 3 gegenüber der jeweiligen Aufnahmebohrung 13a, 10b abgedichtet werden. Die Radialwellendichtringe 23 sind durch jeweils ein Abdeckblech 24 gegen ein unbeabsichtigtes Lösen gesichert. Die Abdeckbleche 24 sind dabei ringförmig ausgebildet und mit dem jeweiligen Lagergehäuseabschnitt 9a, 9b verschraubt.

Die beiden Lagergehäuseabschnitte 9a, 9b besitzen ferner Stützmittel zum ortsfesten Fixieren des Getriebegehäuses 7. Diese sind vorliegend als nach unten vorragende Füße 25 an den Unterteilen 17a, 17b ausgebildet, wobei die Füße 25 eine Stellfläche 26 und Durchgangsbohrungen 27 aufweisen. Damit können die beiden Lagergehäuseabschnitte 9a, 9b beispielsweise an einem Maschinenkörper festgeschraubt werden.

Zwischen den beiden Lagergehäuseabschnitten 9a, 9b erstreckt sich der zentrale Gehäuseabschnitt 8, welcher mehrteilig ausgebildet ist und ein oberes Gehäuseelement 28 und ein unteres Gehäuseelement 29 umfasst. Die beiden Gehäuseelemente 28, 29 sind dabei so ausgestaltet, dass ihre Innenkontur der Form der Zahnräder 4, 5 folgt. Konkret beträgt der Abstand der beiden Gehäuseelemente 28, 29 zu den Zahnrädern in Längsrichtung bzw. quer zur Längsrichtung vorliegend etwa 4 mm.

Wie in FIG 2 zu erkennen ist, verläuft die Außenkontur des zentralen Gehäuseabschnitts 8 zu der in FIG 2 auf der rechten Seite konisch zusammenlaufend. Dadurch wird der Wärmeübergang auf die Umgebung verbessert, wenn ein Luftstrom quer zur Längsrichtung von der in der FIG 2 rechten Seite aus um den zentralen Gehäuseabschnitt 8 geleitet wird.

Das obere Gehäuseelement 28 und das untere Gehäuseelement 29 liegen in einer Trennebene X, welche ebenfalls identisch mit der Schnittebene in FIG 1 ist, an einer Kontaktfläche 30 aneinander an. In der Kontaktfläche 30 des in der FIG 1 dargestellten unteren Gehäuseelements 29 sind zwei Gewindebohrungen 31 angeordnet, welche zum Festschrauben des oberen Gehäuseelements 28 an dem unteren Gehäuseelement 29 dienen. Zum genauen Ausrichten der beiden Gehäuseelemente 28, 29 zueinander sind ferner zwei Zylinderstifte 32 vorgesehen, welche in dem unteren Gehäuseelement 29 angeordnet sind und in korrespondierende Positionierbohrungen 33 des oberen Gehäuseelements 28 eingreifen.

Der zentrale Gehäuseabschnitt 8 besitzt ferner Kühlmittel, welche vorliegend nach außen gerichtete Kühlrippen 34 umfassen. Diese erstrecken sich vorliegend senkrecht zur Längsrichtung und verbessern durch die vergrößerte Oberfläche die Abfuhr von Wärme aus dem Gehäuseinnenraum.

Der Gehäuseinnenraum ist fluiddicht abgedichte. Hierzu sind zwischen den Oberteilen 16a, 16b und den Unterteilen 17a, 17b der Lagergehäuseabschnitte 9a, 9b, zwischen den Lagergehäuseabschnitten 9a, 9b und dem zentralen Gehäuseabschnitt 8 sowie zwischen dem oberen Gehäuseelement 28 und dem unteren Gehäuseelement 29 Dichtungsmittel, vorliegend in Form von Blattdichtungen 35 angeordnet.

Ferner ist, wie in FIG 2 durch die gestrichelte Linie angedeutet, in dem unteren Bereich des zentralen Gehäuseabschnitts 8 ein Schmieröl 36 vorgesehen, in welches die beiden Zahnräder 4, 5 eintauchen, so dass eine kontinuierliche Schmierung der Zahnräder 4, 5 gegeben ist. Das Schmieröl 36 sorgt dafür, dass es die durch die Reibung der Zahnräder 4, 5 entstehende Wärme aufnimmt. Über die nahe an den Zahnrädern 4, 5 verlaufende Innenkontur des zentralen Gehäuseabschnitts und die an diesem ausgebildeten Kühlrippen 34 wird die Wärme dann auf effiziente Weise nach außen abgeleitet.

Um eine Getriebeanordnung, wie sie in den Figuren 1 und 2 dargestellt ist, zu montieren, sind zunächst die beiden Lagergehäuseabschnitte 9a, 9b bereitzustellen. Ferner sind die beiden Getriebewellen, vorliegend die Antriebswelle 2 und die Abtriebswelle 3, bereitzustellen. Diese sind bereits jeweils mit zueinander korrespondierenden Zahnrädern 4, 5 sowie mit den Rillenkugellagern 14 versehen. Abhängig von der Außenform der Zahnräder 4, 5 sind geeignete Gehäuseelemente 28, 29 derart zu wählen, dass deren Innenkontur der Form der Zahnräder 4, 5 folgt. Anschließend werden die Getriebewellen 2, 3 in die Lagergehäuseabschnitte 9a, 9b eingesetzt, wobei vorliegend die Getriebewellen 2, 3 in die Unterteile 17a, 17b der Lagergehäuseabschnitte 9a, 9b eingesetzt werden und anschließend die Oberteile 16a, 16b der Lagergehäuseabschnitte 9a, 9b aufgesetzt, positioniert und mit den Unterteilen 17a, 17b verschraubt werden. Anschließend werden das obere Gehäuseelement 28 und das untere Gehäuseelement 29 an den Lagergehäuseabschnitten 9a, 9b positioniert und mit diesen lösbar verbunden, so dass das Getriebegehäuse 7 den Gehäuseinnenraum mit den beiden Zahnrädern 4, 5 vollständig umschließt.

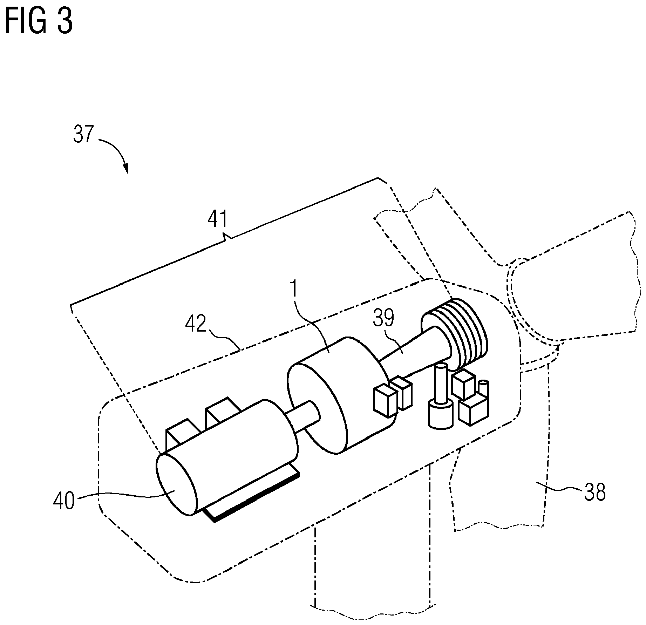

In FIG 3 ist einer geschnittenen Schrägansicht eine Ausführungsform einer erfindungsgemäßen Windkraftanlage 37 dargestellt. Die Windkraftanlage 37 umfasst einen Rotor 38, der durch Wind in Drehung versetzbar ist. Der Rotor 28 ist über eine Rotorwelle 39 an einer erfindungsgemäßen Getriebeanordnung 1 drehmomentübertragend verbunden. Die Getriebeanordnung 1 wiederrum ist drehmomentübertragend mit einem Generator 40 verbunden. Die Rotorwelle 39, die Getriebeanordnung 1 und der Generator 40 gehören zu einem Antriebsstrang 41, der in einer Gondel 42 der Windkraftanlage 37 aufgenommen ist. Der Generator 40 weist zwei, drei, oder vier Poolpaare auf.

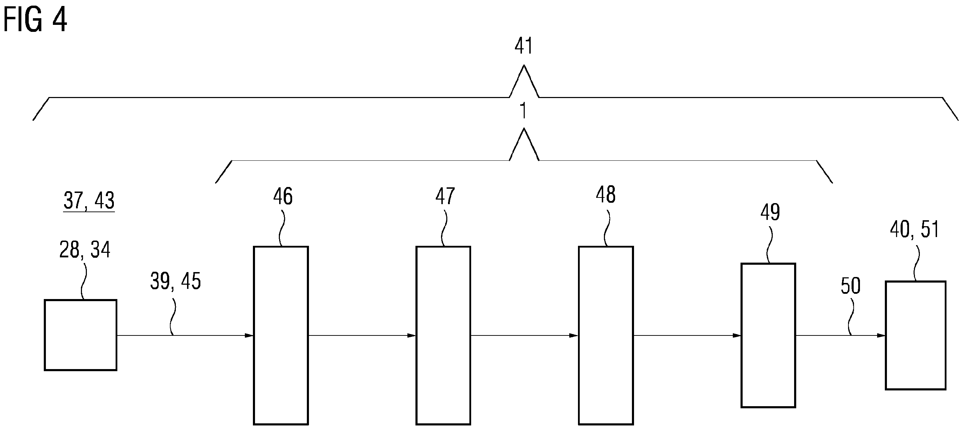

FIG 4 zeigt einen schematischen Aufbau einer weiteren Ausführungsform des erfindungsgemäßen Antriebsstrangs 41, der in einer nicht näher dargestellten Windkraftanlage 37 oder in einer nicht näher dargestellten Industrie-Applikation 43 einsetzbar ist. Der Antriebsstrang 41 umfasst eine erfindungsgemäße Getriebeanordnung 1, welche eingangsseitig mit einem Antriebsmittel 44 oder einem Rotor 38 der Windkraftanlage 37 verbunden ist und dem so eine Antriebsleistung 45 zugeführt wird. In einer Windkraftanlage 37 erfolgt dies mittels einer Rotorwelle 39. Die Getriebeanordnung 1 umfasst vorliegend Planetenstufen 46, 47 und 48 sowie eine Stirnradstufe 49, die hintereinander angeordnet sind. Die Getriebestufen 46, 47, 48 und 49 geben eine Abtriebsleistung 50 an einen Generator 40 oder eine mechanische Anwendung 51 ab.

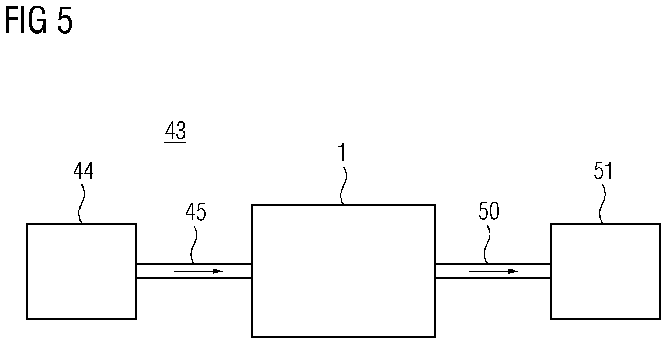

In FIG 5 ist schematisch der Aufbau einer Ausführungsform einer Industrie-Applikation 43 dargestellt, die über ein Antriebsmittel 44 verfügt. Das Antriebsmittel 44 ist dazu ausgebildet, eine Antriebsleistung 45 bereitzustellen, die durch eine drehmomentübertragende Verbindung an eine erfindungsgemäße Getriebeanordnung 1 transportiert wird. Die Getriebeanordnung 1 ist wiederrum drehmomentübertragend mit einer mechanischen Anwendung 51 verbunden, um eine Abtriebsleistung 50 zur mechanischen Anwendung 51 zu transportieren.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Modulares Getriebegehäuse (7) zur Aufnahme eines Getriebes, insbesondere eines Zahnradgetriebes, das einen Gehäuseinnenraum umschließt und eine Längsrichtung definiert, wobei das Getriebegehäuse (7) einen zentralen Gehäuseabschnitt (8) und zwei Lagergehäuseabschnitte (9a, 9b), die auf gegenüberliegenden Seiten von diesem vorgesehen sind, besitzt, wobei die Lagergehäuseabschnitte (9a, 9b) jeweils Aufnahmemittel zur Aufnahme von Lagerungen für rotierende Getriebekomponenten, insbesondere Getriebewellen aufweisen, wobei der zentrale Gehäuseabschnitt (8) und die Lagergehäuseabschnitte (9a, 9b) lösbar miteinander verbunden, insbesondere miteinander verschraubt sind, **dadurch gekennzeichnet, dass** der zentrale Gehäuseabschnitt (8) mehrteilig ausgebildet ist und insbesondere ein oberes und ein unteres Gehäuseelement (28, 29) umfasst.

2. Getriebegehäuse (7) nach einem der vorherigen Ansprüche, **dadurch gekennzeichnet, dass** an dem zentralen Gehäuseabschnitt (8) einerseits und an den beiden Lagergehäuseabschnitten (9a, 9b) andererseits zueinander korrespondierende Positioniermittel vorgesehen sind, wobei die Positioniermittel insbesondere Zylinderstifte (21) und korrespondierende Positionierbohrungen (22) umfassen.

3. Getriebegehäuse (7) nach einem der vorherigen Ansprüche, **dadurch gekennzeichnet, dass** die Außenkontur des zentralen Gehäuseabschnitts (8) derart ausgebildet ist, dass diese in Längsrichtung (L) betrachtet zu einer Seite hin konisch zusammenläuft.

4. Getriebegehäuse (7) einem der vorherigen Ansprüche, **dadurch gekennzeichnet, dass** der zentrale Gehäuseabschnitt (8) Kühlmittel zur Abfuhr von Wärme aus dem Gehäuseinnenraum aufweist.

5. Getriebegehäuse (7) nach Anspruch 4, **dadurch gekennzeichnet, dass** die Kühlmittel Kühlrippen (34) umfassen, welche sich insbesondere quer, bevorzugt senkrecht zur Längsrichtung (L) erstrecken, und/oder dass die Kühlmittel im zentralen Gehäuseabschnitt (8) ausgebildete Hohlräume, insbesondere Kühlmittelkanäle zum Durchleiten eines Kühlfluids, insbesondere von Druckluft und/oder Wasser, umfassen.

6. Getriebegehäuse (7) nach einem der vorhandenen Ansprüche, **dadurch gekennzeichnet, dass** die Aufnahmemittel der Lagergehäuseabschnitte (9a, 9b) jeweils mehrere, insbesondere jeweils vier sich parallel zueinander in den Lagergehäuseabschnitten (9a, 9b) erstreckende Aufnahmebohrungen (10a, 10b, 11a, 11b, 12a, 12b, 13a, 13b) zur Aufnahme von Lagerungen für Getriebewellen, aufweisen, wobei die Mittelachsen der Aufnahmebohrungen (10a, 10b, 11a, 11b, 12a, 12b, 13a, 13b) bevorzugt in einer Ebene verlaufen.

7. Getriebegehäuse (7) nach Anspruch 6, **dadurch gekennzeichnet, dass** die einzelnen Aufnahmebohrungen (10a, 10b, 11a, 11b, 12a, 12b, 13a, 13b) unterschiedliche Durchmesser aufweisen.

8. Getriebegehäuse (7) nach einem der vorherigen Ansprüche, **dadurch gekennzeichnet, dass** die Lagergehäuseabschnitte (9a, 9b) zweiteilig ausgebildet sind und ein Oberteil (16a, 16b) und ein Unterteil (17a, 17b) aufweisen.

9. Getriebegehäuse (7) nach Anspruch 6 und Anspruch 8, **dadurch gekennzeichnet, dass** eine Trennebene (X) zwischen dem Oberteil (16a, 16b) und dem Unterteil (17a, 17b) der Lagergehäuseabschnitte (9a, 9b) in mittig durch die Aufnahmebohrungen (10a, 10b, 11a, 11b, 12a, 12b) verläuft.

10. Getriebegehäuse (7) nach einem der vorherigen Ansprüche, **dadurch gekennzeichnet, dass** die Lagergehäuseabschnitte (9, 9b) Stützmittel zum ortsfesten Fixieren des Getriebegehäuses (7) aufweist, insbesondere wobei die Stützmittel nach außen vorragende Füße (25) umfassen, die eine Stellfläche (26) definieren, wobei in den Füßen (25) bevorzugt Durchgangsbohrungen (27)ausgebildet sind, um den Lagergehäuseabschnitt (9a, 9b) festzuschrauben und so ortsfest zu fixieren.

11. Getriebegehäuse (7) nach einem der vorherigen Ansprüche, **dadurch gekennzeichnet, dass** die beiden Lagergehäuseabschnitte (9a, 9b) über Trägerelemente miteinander verbunden sind, welche ausgebildet und geeignet sind, Kräfte in Längsrichtung (L) zu übertragen, wobei die Trägerelemente insbesondere Verbindungsstangen umfassen, welche sich zwischen den Lagergehäuseabschnitten (9a, 9b) erstrecken und mit diesen lösbar verbunden, insbesondere verschraubt sind, wobei sich die Verbindungsstangen bevorzugt innerhalb des Gehäuses erstrecken.

12. Getriebegehäuse (7) nach einem der vorherigen Ansprüche, **dadurch gekennzeichnet, dass** der Gehäuseinnenraum fluiddicht abgedichtet ist.

13. Getriebegehäuse (7) nach einem der vorherigen Ansprüche, **dadurch gekennzeichnet, dass** mindestens ein Gehäuseabschnitt durch Gießen und/oder durch ein generatives Fertigungsverfahren, insbesondere mittels selektiven Laserschmelzens oder mittels Binder Jetting, hergestellt wurde, und/oder aus einem metallischen Werkstoff, insbesondere aus einem Grauguss oder einer Aluminiumlegierung besteht, und/oder aus einem Thermoplast besteht.

14. Getriebeanordnung (7) mit einem modularen Getriebegehäuse (7) nach einem der vorherigen Ansprüche; und einem Getriebe, welches mindestens zwei Getriebewellen (2, 3), die in die Aufnahmemittel der Lagergehäuseabschnitte (9a, 9b) eingebracht sind und drehmomentübertragende Getriebekomponenten tragen, welche miteinander wirkverbunden oder -verbindbar sind; wobei der zentrale Gehäuseabschnitt (8) derart ausgewählt und/oder ausgestaltet ist, dass seine Innenkontur der Form der drehmomentübertragenden Getriebekomponenten folgt.

15. Getriebeanordnung (1) nach Anspruch 14, **dadurch gekennzeichnet, dass** die Innenkontur des zentralen Gehäuseabschnitts (8) von den drehmomentübertragenden Getriebekomponenten in Längsrichtung (L) und/oder quer zur Längsrichtung (L) höchstens 100 mm, insbesondere höchstens 20 mm, bevorzugt höchstens 5 mm und/oder mindestens 2 mm, insbesondere mindestens 3 mm, bevorzugt mindestens 4 mm beabstandet ist.

16. Getriebeanordnung (1) nach Anspruch 14 oder 15, **dadurch gekennzeichnet, dass** die drehmomentübertragenden Getriebekomponenten Zahnräder (4, 5) umfassen.

17. Verfahren zur Montage einer Getriebeanordnung (1) nach einem der Ansprüche 14 bis 16, umfassend die folgenden Schritte:
- Bereitstellen der Lagergehäuseabschnitte (9a, 9b);
- Bereitstellen der Getriebewellen (2, 3), welche drehmomentübertragende Getriebekomponenten (4, 5) tragen;
- Auswählen eines geeigneten zentralen Gehäuseabschnitts (8) derart, dass dessen Innenkontur der Form der drehmomentübertragenden Getriebekomponenten (4, 5) folgt;
- Einsetzen der Getriebewellen (2, 3) in die Lagergehäuseabschnitte (9a, 9b);
- Anbringen des zentralen Gehäuseabschnitts (8) an den Lagergehäuseabschnitten (9a, 9b).

18. Antriebsstrang (41), umfassend eine Rotorwelle (39), die drehmomentübertragend mit einer Getriebeanordnung (1) verbunden ist, welche wiederrum drehmomentübertragend mit einem Generator (40) verbunden ist, **dadurch gekennzeichnet, dass** die Getriebeanordnung (1) nach einem der Ansprüche 14 bis 16 ausgebildet ist.

19. Windkraftanlage (37), umfassend einen Rotor (38), der an einer Gondel (42) angebracht ist, wobei an der Gondel (42) ein Antriebsstrang (41) angeordnet ist, der drehmomentübertragend mit dem Rotor (38) verbunden ist, **dadurch gekennzeichnet, dass** der Antriebsstrang (41) nach Anspruch 18 ausgebildet ist.

20. Industrie-Applikation (43), umfassend ein Antriebsmittel (44), das mit einer Getriebeanordnung (1) drehmomentübertragend verbunden ist, die mit einer mechanischen Anwendung (51) drehmomentübertragend gekoppelt ist, **dadurch gekennzeichnet, dass** die Getriebeanordnung (1) nach einem der Ansprüche 14 bis 16 ausgebildet ist.
